(19) Europäisches Patentamt
European Patent Office
Office européen des brevets

(11) Publication number: **0 429 861 A2**

(12) # EUROPEAN PATENT APPLICATION

(21) Application number: **90120576.5**

(22) Date of filing: **26.10.90**

(51) Int. Cl.[5]: **C08L 81/00**, C08L 81/06, C08L 65/00, //(C08L81/00, 81:06),(C08L81/06,81:00), (C08L81/00,65:00),(C08L65/00, 81:00)

(30) Priority: **27.10.89 US 427800**

(43) Date of publication of application: **05.06.91 Bulletin 91/23**

(84) Designated Contracting States: **AT BE CH DE ES FR GB IT LI NL Bulletin**

(71) Applicant: **PHILLIPS PETROLEUM COMPANY**
**5th and Keeler**
**Bartlesville Oklahoma 74004(US)**

(72) Inventor: **Wright, Roy Franklin**
**2076 SE Southview**
**Bartlesville, OK 74006(US)**

(74) Representative: **Geissler, Bernhard, Dr. jur., Dipl.-Phys. Patent- und Rechtsanwälte et al**
**Bardehle-Pagenberg-Dost-Altenburg-Frohwitter-Geissler & Partner**
**Postfach 86 06 20**
**W-8000 München 86(DE)**

(54) **Thermoplastic resin compositions, methods for preparing the same and molded products.**

(57) The present invention relates to thermoplastic resin compositions which upon being molded result in products having improved mechanical properties. The compositions are comprised of a homogeneous mixture of a poly(arylene sulfide/sulfone) resin and a second resin selected from the group consisting of poly(arylsulfone) resins and poly(arylketone) resins.



Xerox Copy Centre

# THERMOPLASTIC RESIN COMPOSITIONS AND METHODS

## Background of the Invention

### 1. Field of the Invention.

The present invention relates to thermoplastic resin compositions comprised of poly(arylene sulfide/sulfone) resin mixed with a second resin selected from a poly(arylsulfone) resin or a poly(arylketone) resin, and methods of preparing and using such compositions to form molded products having improved mechanical properties.

### 2. Description of the Prior Art.

Molded poly(arylene sulfide/sulfone) resin compositions are useful in many applications, especially those involving high temperatures such as electrical components, automotive parts and the like. Poly-(arylene sulfide/sulfone) resin has a high melting point and products formed therefrom have a high retention of mechanical properties at high temperatures. The resin can be blended with reinforcing material, mineral fillers and other additives to provide improved mechanical properties.

Because of the high glass transition temperature of poly(arylene sulfide/sulfone) resin and the high melt viscosity thereof, it is difficult to mold by injection molding techniques. Also, while molded poly(arylene sulfide/sulfone) resin compositions have relatively good mechanical properties, they often possess less than the desired elongation and impact strength.

By the present invention, improved poly(arylene sulfide/sulfone) resin compositions are provided which upon being molded have improved mechanical properties including elongation and impact strength.

## Summary of the Invention

Thermoplastic resin compositions comprised of mixtures of poly(arylene sulfide/sulfone) resin and an additional resin are provided which, upon being molded, result in products having improved mechanical properties. Methods of preparing the compositions, methods of producing molded products from the compositions and the molded products so produced are also provided.

The compositions of the present invention are comprised of a poly(arylene sulfide/sulfone) resin and a second resin mixed therewith selected from the group consisting of poly(arylsulfone) resins and poly-(arylketone) resins. The second resin can be present in the composition in an amount in the range of from about 1% to about 99% by weight of the composition to provide desired properties. The compositions can also include reinforcing material, mineral fillers, pigments, processing aids and other additives.

It is, therefore, a general object of the present invention to provide improved thermoplastic resin compositions and methods.

A further object of the present invention is the provision of blend compositions of poly(arylene sulfide/sulfone) resin and poly(arylsulfone) resin or poly(arylketone) resin which when molded result in products having improved processing and mechanical properties.

Other objects, features and advantages of the present invention will be readily apparent to those skilled in the art upon a reading of the description of preferred embodiments which follows.

## Description of Preferred Embodiments

Molded products produced in accordance with the methods of the present invention using the molding compositions of the invention have significant increases in elongation and/or impact strength. The compositions of the invention are comprised of a mixture of poly(arylene sulfide/sulfone) resin and a second resin selected from the group consisting of poly(arylsulfone) resins and poly(arylketone) resins. The compositions can and generally do contain reinforcing materials, mineral fillers and other additives such as plasticizers, pigments, etc.

The term poly(arylene sulfide/sulfone) resin is used herein to broadly designate the aromatic sulfide/sulfone polymers described in United States Patent No. 4,016,145 issued April 5, 1977, and United States Patent No. 4,127,713 issued November 28, 1978, which patents are incorporated herein by

reference. The aromatic sulfide/sulfone polymers of increased molecular weight produced in accordance with the process of United States Patent No. 4,127,713 are preferred for use in accordance with the present invention. Such polymers are produced by contacting at least one dihaloaromatic sulfone, at least one alkali metal sulfide, at least one organic amide, at least one sodium carboxylate, and a sufficient amount of water to produce arylene sulfide/sulfone polymers of higher molecular weight than are normally produced.

A preferred arylene sulfide/sulfone resin is poly(phenylene sulfide/sulfone) resin. Particularly preferred commercially available poly(phenylene sulfide/sulfone) resins are those manufactured by Phillips Petroleum Company of Bartlesville, Oklahoma and marketed as RYTON®S poly(phenylene sulfide/sulfone) resins having melt flows of from about 10 to about 350 grams per 10 minutes as determined by ASTM D1238, condition 343/5.0.

The term poly(arylsulfone) resin is used herein to broadly mean high molecular weight polymers containing sulfone groups and aromatic nuclei in the polymer chain. Poly(arylsulfone) resins suitable for use in accordance with the present invention can be represented by repeating units of the formula:

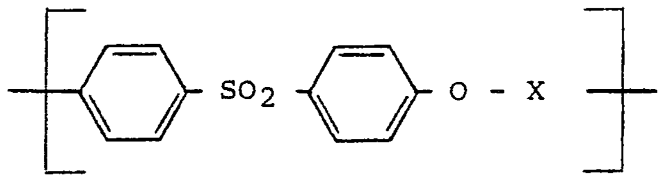

wherein X is a substituted or nonsubstituted aryl group such as arylether. Poly(arylsulfone) resins are generally represented by aromatic rings linked alternately by ether and sulfone groups.

Poly(arylsulfone) resins can be prepared in a polymerisation wherein sulfone links are formed by the reaction of an aromatic sulfonyl chloride with a second aromatic ring. The polymerisation process utilizes catalytic amounts of certain halides, e.g., $FeCl_3$, $SbCl_5$, and $InCl_3$. A process for preparing poly(arylsulfone) resin is disclosed, for example, in United States Patent No. 3,838,097 issued September 24, 1974, which is incorporated herein by reference. A preferred poly(arylsulfone) resin is prepared using 2,2,-bis(4-hydroxyphenyl) propane known as Bisphenol A. Such a poly(arylsulfone) resin which is commercially available from Union Carbide Corporation under the trade name UDEL® P-1700, can be represented by the following formula:

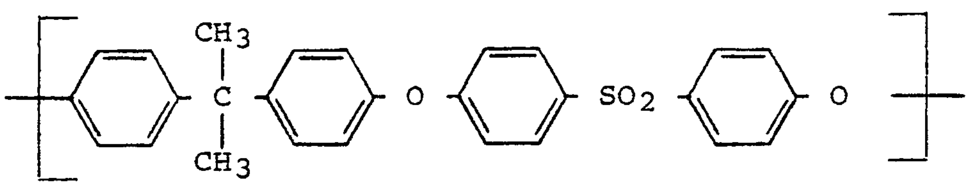

Another preferred poly(arylsulfone) resin is a poly(arylethersulfone) resin, such as sold by Imperial Chemical Industries Ltd., under the trade name VICTREX® 360° C, which can be represented by repeating units of the formula:

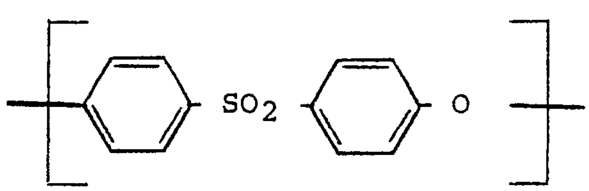

The term poly(arylketone) resin is used herein to broadly designate resins which are represented by repeating units of the following formula:

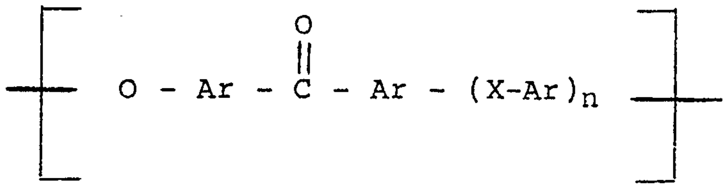

wherein
$A_r$ is a divalent aromatic radical independently selected from phenylene, biphenylene, or naphthylene;
X is independently 0,

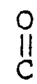

or a direct bond; and
n is 0 or an integer of 1 to about 3.

Preferably, the poly(arylketone) resin is a poly(aryletherketone) resin containing repeating units represented by the following formula:

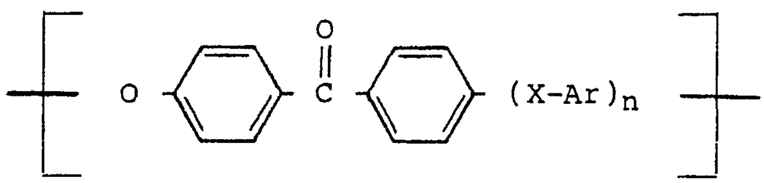

wherein Ar, X and n are as described above.

The most preferred poly(arylketone) resins are those having repeating units of the formula:

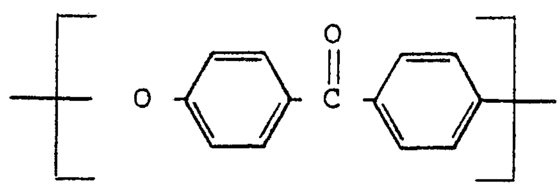

or

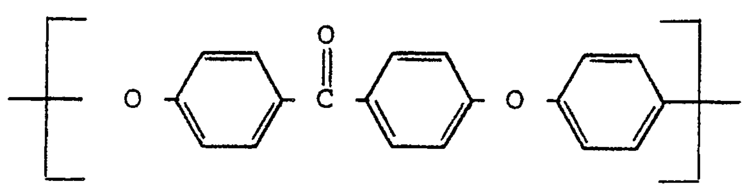

The poly(arylketone) resin employed is usually a poly(aryletheretherketone) resin having repeating units of the latter formula above. A preferred such resin is poly(oxy-1,4-phenyleneoxy-1,4-phenylenecarbonyl-1,4-phenylene) resin, commercially available from Imperial Chemical Industries, Ltd., under the trade name VICTREX® PEEK 450G.

Poly(arylketone) resin can be prepared by methods known in the art such as by heating a substantially equimolar mixture of at least one bisphenol and at least one dihalobenzoid compound or at least one halophenol compound. United States Patent Nos. 4,176,222 issued Novemer 27, 1979, and 3,953,400 issued April 27, 1976, describe such methods and are incorporated herein by reference.

The compositions of the present invention include poly(arylene sulfide/sulfone) resin, preferably poly-

(phenylene sulfide/sulfone) resin, and a second resin selected from the group consisting of poly(arylsulfone) resins and poly(arylketone) resins, the second resin being present in the composition in an amount in the broad range of from about 1% to about 99% by weight of the composition.

When the second resin is a poly(arylsulfone) resin, it preferably a resin prepared using Bisphenol A represented by the formula:

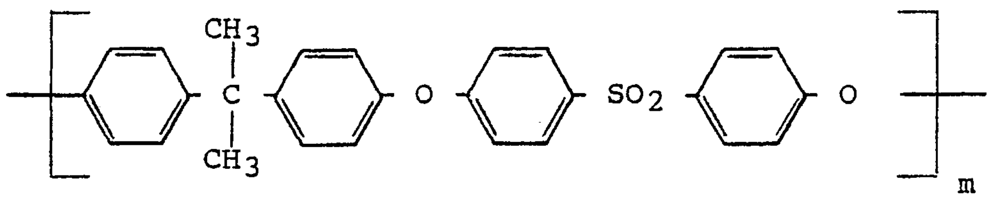

in which m has a value in the range of about 50 to 80, and is present in the composition in an amount in the range of from about 10% to about 90% by weight of the composition.

Another equally preferred poly(arylsulfone) resin for use in accordance with the present invention is poly(arylethersulfone) resin represented by repeating units of the formula:

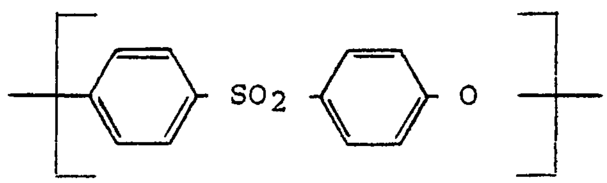

present in the composition, when used, in an amount in the range of from about 10% to about 90% by weight thereof.

When the second resin is a poly(arylketone) resin, it is preferably poly(aryletherketone) resin, and most preferably, poly(aryletheretherketone) resin present in the composition in an amount in the range of from about 10% to about 90% by weight thereof.

The particular second resin used in admixture with the poly(arylene sulfide/sulfone) resin depends upon the particular processing and mechanical properties desired. Such properties can be determined for different blends of resins by tests of the types described in the Examples which follow which are well known to and can be readily made by those skilled in the art.

The compositions can optionally include fibrous reinforcing material to impart improved strength and other physical properties to molded products formed from the compositions. Examples of fibrous reinforcing materials which can be used are glass fibers, carbon fibers and silicon carbide fibers. Generally, when used, the fibrous reinforcing material is included in the resin compositions in an amount of from about 5% to about 65% by weight of the resins present in the compositions. Mineral fillers such as talc, silica, clay, alumina, calcium sulfate, calcium carbonate, mica and mixtures of such fillers can also optionally be used in the compositions as can other known additives. When a mineral filler is used, it is included in the compositions in an amount in the range of from about 2% to about 65% by weight of the resins in the compositions.

A preferred composition of the present invention is comprised of a homogeneous mixture of poly-(phenylene sulfide/sulfone) resin and a second resin selected from the group consisting of poly(arylsulfone) resin, poly(arylethersulfone) resin and poly(aryletheretherketone) resin, wherein the second resin is present in the composition in an amount in the range of from about 10% to about 90% by weight of the composition. A fibrous reinforcing material is present in the composition in an amount in the range of from about 0% to about 65% by weight of the resins therein, and a mineral filler is present in an amount in the range of from about 0% to about 65% by weight of the resins. The most preferred second resin is poly-(aryletheretherketone) resin present in the composition in an amount in the range of from about 10% to about 90% by weight of the composition. The other additives mentioned above can include, but not be limited to, pigments such as carbon black, mold corrosion inhibitors such as hydrotalcite, e.g., the hydrotalcite sold by Kyowa Chemical Company, Ltd., of Osaka, Japan under the trade designation DHT-4A, and processing aids such as high density polyethylene.

The molding compositions of this invention are prepared by mixing the poly(arylene sulfide/sulfone) resin with the second resin used, the fibrous reinforcing material, if used, and filler, if used. The resins and other optional components of the composition can be mixed at room tempera ture in a rotating drum blender, or in an intensive mixer such as a Henschel mixer, to form a homogeneous mixture of the components. The homogeneous mixture of components can then be extrusion compounded at a temperature above the glass transition temperature of the resins to produce a uniform composition. The extrudate can be in the form of strands, sheets or tapes.

In producing molded products having improved mechanical properties, including elongation and impact strength, a molding composition of the present invention is prepared as described above. The composition is then injection molded or compression molded in a known manner to form desired products therefrom.

The following examples are presented to further illustrate the compositions and methods of this invention. The particular species and conditions employed in the examples are intended to be illustrative of the invention and not limiting thereto.

## Example 1

A series of homogeneous blends was prepared by mixing a poly(phenylene sulfide/sulfone) resin (Phillips Petroleum Company RYTON®S PPSS) having a melt flow of about 42 grams per 10 minutes measured in accordance with ASTM D1238, condition 343/5.0 with a poly(arylsulfone) resin (Union Carbide Corporation UDEL® P-1700) having a glass transition temperature of about 210 °C. Each test mixture in the series was blended and extruded through a Davis-Standard extruder, 1.5 inch diameter and 24:1 L:D ratio at a temperature of about 650 °F. A metering/mixing screw with Dulmage mixing sections was used at 60-90 rpm. No die was utilized, and the extruded mixture was chopped while hot. The resins used were dried for 2 hours at 150 °C in the presence of air before mixing, and the extruded chopped mixtures were also dried for 2 hours at 150 °C before molding. Each of the chopped dried mixtures were then molded into test specimen bars using an Arburg 221E/170R injection molding machine. The mold temperature was about 275 °F and the barrel temperature was about 650 °F.

For comparison purposes, test specimen bars were made as described above using the individual thermoplastic resins alone. The specimen bars were tested for flexural modulus and strength in accordance with ASTM D790, tensile strength and elongation in accordance with ASTM D630, impact resistance (IZOD) in accordance with ASTM D256 and for heat deflection temperature in accordance with ASTM D640. The molding compositions used and the results of the tests are shown in Table I below.

TABLE I

| MECHANICAL PROPERTIES OF POLY(ARYLENE SULFIDE/SULFONE)POLY(ARYLSULFONE) RESIN BLENDS | | | | | |
|---|---|---|---|---|---|
| RUN | 1 | 2 | 3 | 4 | 5 |
| COMPOSITION | | | | | |
| Component, Weight % | | | | | |
| Poly(phenylene sulfide/sulfone) Resin | 0 | 25 | 50 | 75 | 100 |
| Poly(arylsulfone) Resin | 100 | 75 | 50 | 25 | 0 |
| MECHANICAL PROPERTIES | | | | | |
| Flexural Modulus, msi | 0.43 | 0.45 | 0.45 | 0.47 | 0.49 |
| Flexural Strength, ksi | 18.4 | 19.7 | 19.9 | 22.1 | 22.4 |
| Tensile Strength, ksi | | | | | |
| Yield | 12.8 | 13.8 | 14.0 | 15.5 | 16.8 |
| Break | 10.8 | 9.4 | 10.5 | 12.1 | 16.5 |
| Elongation, % | | | | | |
| Yield | 8.8 | 9.0 | 9.0 | 9.9 | 9.9 |
| Break | 32.8 | 17.7 | 38.5 | 11.4 | 9.9 |
| Impact Strength, ft-lb/in | | | | | |
| Notched Izod | 1.1 | 1.0 | 0.9 | 0.6 | 0.6 |
| Unnotched Izod | No break | 40.4 | No break | 14.8 | 16.3 |
| Heat Deflection Temp., °C | 169 | 170 | - | 174 | 186 |

From Table I it can be seen that the tested blends have good overall mechanical properties, and that the 50% blend exhibited excellent elongation at break as well as high impact strength.

Example 2

The procedure of Example 1 was repeated except that poly(arylethersulfone) resin (Imperial Chemical Industries Ltd., VICTREX® 3600G) having a glass transition temperature of about 224°C was substituted for the poly(arylsulfone) resin. The resin compositions used in the series and the results of the tests are shown in Table II below.

TABLE II

| MECHANICAL PROPERTIES OF POLY(ARYLENE SULFIDE/SULFONE)POLY(ARYLETHERSULFONE) RESIN BLENDS | | | | | |
|---|---|---|---|---|---|
| RUN | 1 | 2 | 3 | 4 | 5 |
| COMPOSITION | | | | | |
| Component, Weight % | | | | | |
| Poly(phenylene sulfide/sulfone) Resin | 0 | 25 | 50 | 75 | 100 |
| Poly(arylethersulfone) Resin | 100 | 75 | 50 | 25 | 0 |
| MECHANICAL PROPERTIES | | | | | |
| Flexural Modulus, msi | 0.46 | 0.46 | 0.48 | 0.48 | 0.49 |
| Flexural Strength, ksi | 21.0 | 21.9 | 22.7 | 23.1 | 23.0 |
| Tensile Strength, ksi | | | | | |
| Yield | 14.7 | 15.1 | 15.4 | 16.2 | 16.5 |
| Break | 11.1 | 13.1 | 13.4 | 16.2 | 16.5 |
| Elongation, % | | | | | |
| Yield | 10.0 | 10.0 | 10.2 | 10.4 | 9.7 |
| Break | 36.0 | 13.1 | 14.1 | 11.1 | 9.8 |
| Impact Strength, ft-lb/in | | | | | |
| Notched Izod | 0.8 | 0.8 | 0.8 | 0.8 | 0.7 |
| Unnotched Izod | 16.2 | 39.0 | 22.0 | 16.3 | 13.6 |

From Table II it can be seen that the resin compositions tested have good overall mechanical properties and excellent impact strength.

## Example 3

The procedure of Example 1 was again repeated except that poly(aryletheretherketone) resin (Imperial Chemical Industries, Ltd., VICTREX® 450G) was substituted for the poly(arylsulfone) resin. The resin compositions used in the series and the results of the tests are shown in Table III below.

TABLE III

| MECHANICAL PROPERTIES OF POLY(ARYLENE SULFIDE/SULFONE)POLY(ARYLETHERETHERKETONE) RESIN BLENDS | | | | | |
|---|---|---|---|---|---|
| RUN | 1 | 2 | 3 | 4 | 5 |
| COMPOSITION | | | | | |
| Component, Weight % | | | | | |
| Poly(phenylene sulfide/sulfone) Resin | 100 | 75 | 50 | 25 | 0 |
| Poly(aryletheretherketone) Resin | 0 | 25 | 50 | 75 | 100 |
| MECHANICAL PROPERTIES | | | | | |
| Flexural Modulus, msi | 0.49 | 0.48 | 0.52 | 0.53 | 0.57 |
| Flexural Strength, ksi | 23.0 | 22.2 | 20.4 | 22.8 | 23.9 |
| Tensile Strength, ksi | | | | | |
| Yield | 16.5 | 14.2 | 14.4 | 14.6 | 14.6 |
| Break | 16.5 | 14.2 | 13.1 | 15.0 | 15.0 |
| Elongation, % | | | | | |
| Yield | 9.7 | 10.2 | 9.3 | 9.3 | 8.6 |
| Break | 9.8 | 12.8 | 64.0 | 66.7 | 20.9 |
| Impact Strength, ft-lb/in | | | | | |
| Unnotched Izod | 13.6 | 8.7 | 15.4 | 16.4 | No break |

From Table III it can be seen that the tested compositions exhibited good mechanical properties overall, including excellent elongation to break and high impact strengths.

The present invention, therefore, is well adapted to carry out the objects and attain the ends and advantages mentioned as well as those inherent therein. While substitutions for the components and changes in the steps of the invention may be made by those skilled in the art, such substitutions and changes are encompassed within the scope of the invention as defined by the appended claims.

## Claims

1. A thermoplastic resin composition having improved processing and mechanical properties comprising a mixture of poly(arylene sulfide/sulfone) resin and a second resin selected from the group consisting of poly-(arylsulfone) resins and poly(arylketone) resins, said second resin being present in said composition in an amount in the range of from about 1% to about 99% by weight of the composition.

2. The composition of claim 1 wherein said poly(arylene sulfide/sulfone) resin is poly(phenylene sulfide/sulfone) resin.

3. The composition of claim 1 wherein said second resin is a poly(arylsulfone) resin present in said composition in an amount in the range of from about 10% to about 90% by weight of the composition.

4. The composition of claim 1 wherein said second resin is a poly(arylethersulfone) resin present in said composition in an amount in the range of from about 10% to about 90% by weight of the composition.

5. The composition of claim 1 wherein said second resin is a poly(arylethekeketone) resin present in said composition in an amount in the range of from about 10% to about 90% by weight of the composition.

6. The composition of one of the preceding claims which is further characterized to include a fibrous reinforcing material present in an amount of from about 0% to about 65% by weight of the resins present in the composition, in particular wherein said fibrous reinforcing material is selected from the group consisting of glass fibers, carbon fibers and silicon carbide fibers.

7. The composition of claim 6 which is further characterized to include a mineral filler present in an amount in the range of from about 0% to about 65% by weight of the resins present in said composition, in particular wherein said mineral filler is selected from the group consisting of talc, silica, clay, alumina, calcium sulfate, calcium carbonate, mica and mixtures thereof.

8. A method of preparing a molding composition which upon being molded results in a product having improved processing and mechanical properties comprising mixing a composition comprising poly(arylene

sulfide/sulfone) resin and a second resin selected from the group consisting of poly(arylsulfone) resins and poly(arylketone) resins to form a homogeneous mixture thereof, said second resin being present in said mixture in an amount in the range of from about 1% to about 99% by weight of the mixture.

9. A method of producing a molded product having improved processing and mechanical properties comprising the steps of:

mixing a composition comprising poly(arylene sulfide/sulfone) resin and a second resin selected from the group consisting of poly(arylsulfone) resins and poly(arylketone) resins, said second resin being present in said mixture in an amount in the range of from about 1% to about 99% by weight of said mixture; and

forming a molded product using said mixture.

10. The method of claim 8 or 9 wherein said composition is the composition of one of the claims 2 to 7.

11. A molded product produced in accordance with the method of claim 9 or 10.